# EUROPÄISCHE PATENTSCHRIFT

(11) **EP 2 981 592 B1**
(45) Veröffentlichungstag und Bekanntmachung des Hinweises auf die Patenterteilung: **29.11.2017**
(21) Anmeldenummer: 14715013.0
(22) Anmeldetag: 03.04.2014
(51) Int. Cl.: C09K 21/02, A62C 99/00, A62D 1/00

(54) **BRANDSCHUTZFORMKÖRPER**
MOULDED FIRE PROTECTION BODY
CORPS DE FORMAGE IGNIFUGE

(30) Priorität: 04.04.2013 EP 13162338
(43) Veröffentlichungstag der Anmeldung: 10.02.2016
(73) Patentinhaber: Sterrer, Petra, 4863 Seewalchen (AT)
(72) Erfinder: Sterrer, Manfred, 4863 Seewalchen (AT); Sterrer, Petra, 4863 Seewalchen (AT)
(74) Vertreter: Sonn & Partner Patentanwälte
(86) Internationale Anmeldenummer: PCT/EP2014/056740
(87) Internationale Veröffentlichungsnummer: WO 2014/161963

(56) Entgegenhaltungen:
- DE-A1- 10 239 631
- DE-A1-102008 006 778
- US-A- 4 177 152
- Anonym: "DS_Perlit_Daemmschuettung", BACHL , 25. November 2011 (2011-11-25), XP002712052, Gefunden im Internet: URL:http://bachl.de:80/uploads/media/DS_Pe rlit_Daemmschuettung.pdf [gefunden am 2011-11-25]

## Beschreibung

Die vorliegende Erfindung betrifft einen Brand- bzw. Feuerschutzformkörper, welcher bei Bedarf Löschmittel freisetzt.

Laut Wikipedia gehören zum Brandschutz alle Maßnahmen, die der Entstehung eines Brandes oder der Brandausbreitung durch Feuer oder Rauch vorbeugen, die Rettung von Menschen und Tieren oder wirksame Löscharbeiten bei einem Brand ermöglichen. Brandschutz und Feuerschutz sind Synonyme, wobei unter "Feuerschutz" auch der taktische Beschuss von gegnerischen Stellungen mit leichten Waffen verstanden wird. Im Folgenden wird daher für den erfindungsgemäßen Formkörper durchgehend der Begriff "Brandschutzformkörper" verwendet werden.

Löschmittel haben die Aufgabe, brennende Stoffe unter Berücksichtigung ihrer Brandklasse und vorherrschender Umfeldbedingungen (beispielsweise Personengefährdung oder Raumgröße) zu löschen. Sie werden zur Brandbekämpfung von den Feuerwehren oder in automatischen Feuerlöschanlagen eingesetzt oder stehen zur Selbsthilfe in tragbaren Feuerlöschern oder mobilen Feuerlöschgeräten zur Verfügung.

Jedes Löschmittel besitzt eine Hauptlöschwirkung und eventuelle Nebenlöschwirkungen. Die falsche Auswahl des Löschmittels kann fatale Folgen haben, so reagieren beispielsweise einige chemische Stoffe mit Wasser. Bei chemischen Löschmitteln werden bei hohen Temperaturen auch bisweilen Moleküle aufgebrochen und gehen neue Verbindungen ein. Mögliche Folgen davon sind Explosionsgefahr oder Säurebildung.

Als Stand der Technik trockener Löschmittel sind Löschpulver bekannt, welche schnell und effizient sind. Die Löschwirkung solcher Löschpulver wird durch den Stick- und Inhibitionseffekt erzielt, die Bildung von Sinterschichten auf dem Brandherd reduziert bzw. verhindert auch die Luftdiffusion zum Brandherd. Somit wird die Gefahr einer Brandausweitung bzw. eines Nachbrandes wirksam verhindert. Löschpulver bestehen zumeist aus anorganischen Salzen, die mit Funktionsadditiven versetzt sind, wodurch beispielsweise die Rieselfähigkeit und der Hydrophobierungseffekt eingestellt werden.

Üblichen Löschmittel weisen neben der inhärenten Problematik, dass es bereits zu einem Brand gekommen ist, im Wesentlichen zwei Hauptnachteile auf, nämlich eine fehlende Wiederverwendbarkeit einerseits und eine Gefährdung der Umwelt und/oder der Gesundheit von Personen anderseits, dazu kommt die Beschränkung der Anwendung der Löschmittel auf bestimmte Brandklassen.

So offenbaren die DE 197 25 761 A1, die DE 196 00 977 A1 und die DE 296 00 466 U1 die Verwendung von Hohlglaskugeln als wärme- und schallisolierende Zusätze in Brandschutzbeschichtungen und als Gerüststoffe zur Verbesserung der pastösen Eigenschaften von Schaummassen im vorbeugenden baulichen Brandschutz.

Die DE 43 16 189 A1 offenbart die Verwendung von Hohlglaskugeln als Verstärkungsmittel in thermoplastischen flammengeschützten Formmassen.

Die DE 102 39 631 A1 offenbart Isolierbauteile zur Wärme- und/oder Schallisolierung mit einer feuerhemmenden Beschichtung, die zur Reduzierung des Gewichts und Verbesserung der Isolierwirkung keramische Mikrohohlkugeln aufweisen.

Aus der DE 690 03 994 T2 ist ein pulverförmiges Löschmittel bekannt, das eine Mischung von 95 bis 70 Gew.-% eines Boroxidpulvers mit einem Partikeldurchmesser im Bereich von 5 bis 1000 µm und 5 bis 30 Gew.-% eines anorganischen Pulvers aus Partikeln mit einer im Wesentlichen sphärischen Partikelform enthält, die entweder als Glasperlen mit einem Partikeldurchmesser im Bereich von 5 bis 200 µm oder als hohle Mikrokugeln im Bereich von 50 bis 600 µm ausgebildet sind.

In der DE 38 30 122 A1 wird ein Brandbekämpfungsmaterial geoffenbart, das ganz oder hauptsächlich aus Glaspartikeln besteht, wobei die Glaspartikel Partikel aus zerkleinertem Glasmaterial sind, das einen hydrophoben Überzug trägt.

Aus der DE 43 43 196 A1 sind Hohlperlen aus Bor enthaltenen Aluminiumphosphaten bekannt. Diese können als Verpackungsmaterial, zum Abdecken von Flüssigkeiten, als Zusatz zu Lacken, Beschichtungen, Mörteln, Beton und Gips, als Füllstoff für flüssige und feste Kunstharze, Elastomere und Kunststoffe, zur Herstellung von blättchenförmigen Pigmenten, als Elektroisoliermaterial, als Zusatz zu Spachtelmassen, keramischen Schlicken, Ziegelmasse, Estrichen, Kitten, Keramik, Glasmassen und metallischen und nichtmetallischen Sintermassen, als Ausgangsmaterialien zur Herstellung von Leicht-Formteilen und als Teil von Bau- und Konstruktionselementen mit isolierenden und schallabsorbierenden Eigenschaften, sowie gegebenenfalls auch als Isoliermaterial und für einen Brandschutz verwendet werden.

Aus der WO 2004/026788 A1 ist ein Isolierbauteil zur Wärme- und/oder Schallisolierung bekannt, welches Bauteil zumindest partiell mit einer feuerhemmenden Beschichtung versehen ist, wobei sich die Beschichtung mindestens aus 40 bis 90 Gew.-% eines keramischen Klebstoffes, 5 bis 50 Gew.-% keramischer Mikrohohlkugeln mit einer Korngröße im Bereich von 0,1 bis 3 mm sowie 0,1 bis 10 Gew.-% eines unter Wärmeeinwirkung expandierenden Treibmittels zusammensetzt.

Aus der WO 2007/125070 A2 ist ein Löschmittel enthaltend temperaturfestes, hohles Rundgranulat und ein System zum Löschen von Bränden im Gefahrenobjekt unter dessen Verwendung sowie ein Verfahren zum Löschen von Bränden bekannt, wobei ein entsprechendes Löschmittel auf den Brand aufgebracht wird.

Die Herstellung von Hohlglaskugeln ist bekannt und geht z. B. aus der DE 39 90 975 T1 und DE 689 26 048 T2 hervor, wobei dies im Wesentlichen durch Erhitzen von Vollglasteilchen erfolgt.

Die Veröffentlichung "DS Perlit Dämmschüttung" (http://bachl.de:80/uploads/media/ DS_Perlit_Daemmschuettung.pdf) offenbart ein expandiertes natürlich vorkommendes Silikatgestein vulkanischen Ursprungs als Perlit Dämmschüttung mit einer Körnung im Bereich von 0-6 mm und einer Schüttdichte von etwa 90 kg/m³. Die Perlite sind in Säcken aus Polyethylen verpackt.

Die EP 1 300 178 A1 betrifft eine Vorrichtung zur Unterdrückung von Feuer, insbesondere in Fritteusen. Die Vorrichtung weist eine nicht brennbare Feuerschutzdecke auf, an welcher eine Packung enthaltend ein Löschmaterial befestigt ist. Im Falle eines Brandes wird die Feuerschutzdecke mit der Packung direkt über dem Feuer platziert, wodurch die Umhüllung der Packung schmilzt, sodass das darin enthaltene Löschmaterial freigegeben und das Feuer unterdrückt wird. Die Umhüllung kann Polyethylen (HDPE) umfassen und das Löschmaterial kann Feststoffe, fließfähiges Pulver, insbesondere Natrium oder Kaliumbicarbonat, Flüssigkeiten oder ein Gel umfassen.

Aus der GB 1,017,993 geht ein Behälter für den Transport und die Aufbewahrung von festem, pyrophorem Material hervor, welcher an der Innenseite seiner Seitenwände und seines Bodens ein festes Löschmittel aufweist, das gegenüber dem Innenraum des Behälters mit einem festen, thermoplastischen Material abgegrenzt ist. Das Löschmittel auf Basis einer eutektischen Mischung anorganischer Salze weist einen geringen Schmelzpunkt von beispielsweise 545 °C oder 454 °C auf. Im Brandfall schmelzen das thermoplastische Material und das Löschmittel, sodass letzteres den Brand unterdrückt.

Die FR 2 371 207 und die US 4,177,152 betreffen ein Verfahren zum Löschen von Metallbränden, insbesondere von Bränden von Natrium und von Leichtmetallen wie Aluminium, Magnesium und Legierungen hiervon. Als Löschmittel für 1 kg brennendes Natrium werden 25 g eines mit Salpetersäure behandelten Graphits in einem Polyethylenbeutel genannt, welcher bei der hohen Temperatur verbrennt und den Graphit freigibt.

Die WO 81/01106 betrifft eine Vorrichtung zur Brandbekämpfung brennender Töpfe, welche in Form eines Tellers oder einer Haube aus einem flammfesten, luftdichten Material auf bzw. über den brennenden Topf gestülpt wird. An der Innenseite des Tellers oder der Haube kann ein Behälter aus brennbarem oder schmelzbarem Material, beispielsweise aus einer thermoplastischen Kunststofffolie, einem Löschpulver, beispielsweise auf Basis von Natriumhydrogencarbonat, enthalten sein. Unter der Flammeneinwirkung schmilzt der Behälter und das in den Topf fallende Löschpulver trägt dazu bei, die Flammen zu ersticken. Alternativ kann Löschschaum über eine im Innenraum des Tellers oder der Haube endende Ausgabevorrichtung in den brennenden Topf eingebracht werden.
Vorbeugender Brandschutz ist der Überbegriff für alle Maßnahmen, die im Gegensatz zu Löschmitteln im Voraus die Entstehung, Ausbreitung und Auswirkung von Bränden verhindern, beziehungsweise stark einschränken. Brandschutz wird meist in Gebäuden betrieben, er beschränkt sich jedoch keinesfalls auf sie. Die baulichen Maßnahmen zum vorbeugenden Brandschutz beispielsweise in Gebäuden sind sehr vielfältig und erstrecken sich von den verwendeten Baustoffen und Bauteilen, geregelt in DIN 4102 und ENV 1992-1-2, über den baulichen Brandschutz in Industriebauten, geregelt in der DIN 18230, über die Fluchtwegplanung bis hin zu Löschanlagen in Gebäuden.

Die WO 2009/095421A1 bzw. EP 2 167 439 A1 betrifft ein Brandschutzmittel zum vorbeugenden Brandschutz durch dauerhaftes Aufbringen auf das Gefahrenobjekt und/oder dauerhaftes Verfüllen des Gefahrenobjekts bestehend aus einem bis wenigstens 1000 °C temperaturfesten hohlen Rundgranulats, und ein Verfahren zu dessen Einsatz. Das rieselfähige Rundgranulat hat dabei einen Durchmesser von 0,1-5 mm, eine Dichte von etwa 220 kg/m³ und einen Schmelzpunkt von insbesondere >1200 °C. Es kann in Form von hohlen, keramischen Kugeln vorliegen, schwimmfähig vorbeugend als flexible Deckschicht auf brennbaren Flüssigkeiten aufgebracht werden und zusätzlich mit Stickstoff oder Kohlendioxid gefüllt sein.

Die vorliegende Erfindung hat die Aufgabe, einen vorbeugenden Brandschutz und gleichzeitig ein integriertes Löschmittel, beispielsweise in der Gefahrgut-Verpackung oder sonstigen Umhüllungen, sowie Einbauten von Gefahrgütern oder Bauteilen, wie z.B. Batterien, bereitzustellen.

Erfindungsgemäß wird diese Aufgabe dadurch gelöst, dass ein Brandschutzformkörper zumindest teilweise eine äußere Umhüllung aus einem thermoplastischen Material und eine Füllung aufweist, welche ein fließfähiges, anorganisches Granulat umfasst, wobei das fließfähige, anorganische Granulat eine Dichte von 25 bis 150 kg/m³, bevorzugter 35 bis 80 kg/m³ und am meisten bevorzugt etwa 50 bis 70 kg/m³ und eine Wasseraufnahme bei Raumtemperatur von unter 100 %, vorzugsweise unter 95 %, aufweist, und der Brandschutzformkörper evakuiert ist. Dabei ist das fließfähige, anorganische Granulat in einer Folienverpackung vorgesehen, welche Verpackung nach Befüllen mit dem Granulat durch Absaugen der Luft evakuiert wurde und dadurch besonders formstabil ausgebildet ist. Bei allfälliger Brandgefahr wird ein Gefahrgut von ein oder mehreren der erfindungsgemäßen Brandschutzformkörpern umhüllt, welche dadurch gleichzeitig eine isolierende und schützende Verpackung vorsehen. Im Brandfall schmilzt aufgrund der erhöhten Temperatur zumindest der dem Gefahrgut zugewandte Teil der äußeren Umhüllung bestehend aus thermoplastischem Material, und die fließfähige Füllung aus anorganischem Granulat ergießt sich über den brennenden Gegenstand. Weiterer Luftzutritt zum Brandherd wird dadurch zumindest stark behindert und ein bereits entstandener Brand so zuverlässig gelöscht. Die äußere Umhüllung kann dabei auf dem dem Gefahrgut abgewandte Teil auch beispielsweise Karton oder einen anderen leicht bedruckbaren Träger umfassen und damit eine blisterartige Verpackung der fließfähigen Füllung vorsehen, wichtig ist nur, dass der dem Gefahrgut zugewandte Teil zumindest bereichsweise schmelzen bzw. sich auflösen und die fließfähige Füllung freisetzen kann. Die geringe Wasseraufnahme ist höchstwahrscheinlich darauf zurückzuführen, dass das erfindungsgemäß verwendete fließfähige, anorganische Granulat ein annähernd kugelförmiges Produkt sein soll, das im Gegensatz zu Granulaten des Standes der Technik einerseits sehr leicht und andererseits rieselfreudig ist. Gemessen wird die Wasseraufnahme durch das Prüfverfahren gemäß BVK - Betontechnische Merkblätter, http://www.interverband.com/u-img/774/104_MB_Pruef.pdf, zweite Ausgabe 2001. Kurz gesagt wird dabei eine repräsentative Probe (DIN 4226, Teil 3) des Granulat im Trockenschrank bei 110 °C ± 5 K bis zur Gewichtskonstanz getrocknet, anschließend muss die Probe bei bzw. auf Raumtemperatur auskühlen. Die Bestimmung der Wasseraufnahme erfolgt dabei derart, dass ein Schwarzbandfilter in eine Filternutsche (600 ml, Durchmesser 150 mm) eingelegt, die Nutsche mit 200 ml Wasser gefüllt, auf einen Erlenmeyerkolben aufgesetzt und mittels einer Wasserstrahlpumpe ca. 10 Sek. lang das Wasser abgesaugt wird. Die Masse der Nutsche mit feuchtem Filter wird dann auf 0,1 g genau bestimmt. Dann wird die Nutsche bis ca. 1 cm unterhalb der Oberkante mit bis zur Gewichtskonstanz getrockneter Probe gefüllt und die Masse auf 0,1 g genau bestimmt. Sodann wird die Nutsche mit Wasser gefüllt und vorsichtig umgerührt, um den Filter nicht zu zerstören, ggf. ist Wasser nachzudosieren. Die Probe bleibt 2 Min. wassergesättigt, dann wird das Überschusswasser 5 Min. lang mit einer Wasserstrahlpumpe abgesaugt. Die Masse der Nutsche mit feuchtem Filter sowie wassergesättigter Probe wird auf 0,1 g genau bestimmt, maßgebend ist das Mittel aus drei Einzelwerten. Die Einzelwerte sind anzugeben. Die Wasseraufnahme in Prozent berechnet sich dabei als Masse Sättigungswasser/Masse trockene Probe mal 100.

Das fließfähige, anorganische Granulat weist dabei vorzugsweise eine Erweichungs- bzw. Sintertemperatur von > 700 °C und einen Schmelzpunkt von > 1200 °C (welcher gegebenenfalls durch anorganische Zusätze auf einen höheren Wert bis > 3000 °C eingestellt werden kann, beispielsweise für den Schutz vor extrem heißen Bränden, wie Magnesiumbrände), während das thermoplastische Material, welches beispielsweise zumindest teilweise in Form einer Folie oder Platte vorliegen kann, eine weit geringere Schmelztemperatur aufweist, vorzugsweise im Bereich von ≤ 350 °C, noch bevorzugter ≤ 200 °C. Geeignete thermoplastische Materialien sind beispielsweise Acrylnitril-Butadien-Styrol (ABS), Polyamide (PA), Polylactat (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK) und Polyvinylchlorid (PVC) und Mischungen davon, bevorzugt sind PET, PE und Mischungen davon.

Gemäß einer bevorzugten Ausführungsform der vorliegenden Erfindung umfasst das fließfähige, anorganische Granulat eine Struktur mit überwiegend geschlossenen Zellen, vorzugsweise mit über 90 % geschlossenen Zellen. Solche Granulate können beispielsweise durch ein Abkühlen der Oberfläche des geblähten Materials unmittelbar nach dem Blähvorgang auf unter 100 °C, vorzugsweise auf unter 80 °C, vorgesehen werden. Ein derartiges Verfahren wird beispielsweise in der WO 2013/053635 A1 beschrieben. Bevorzugt ist das fließfähige, anorganische Granulat ausgewählt aus der Gruppe bestehend aus geblähtem Perlit, geblähtem Vermiculit, Natur- oder Hüttenbims, Blähton, Blähglas, Schaumschlacke, Steinwollegranulat oder Hüttenwolle sowie Kombinationen davon. Besonders bevorzugt ist, wenn für das fließfähige, anorganische Granulat als Rohstoff Natur-Mineral-Perlite mit SiO₂ 60-80%, CaO 0-2%, Al₂O₃ 7-18%, MgO 0-1,5%, TiO₂ 0-1%, Na₂O 0,6-10%, Fe₂O₃ 0-2,5% und K₂O 1-5,5% (alle Angaben in %-Masse) verwendet werden, welche gemäß dem Verfahren wie in der WO 2013/053635 A1 beschrieben behandelt werden.

Vorzugsweise weist der erfindungsgemäße Brandschutzformkörper die äußere Umhüllung bestehend aus zwei zumindest bereichsweise miteinander verschweißten Folien auf, welche Folien gegebenenfalls unterschiedliche Stärke und Zusammensetzung aufweisen, wobei die verschweißten Bereiche polster- oder kissenförmig ausgebildet sind und die ein fließfähiges, anorganisches Granulat umfassende Füllung jeweils in den polster- oder kissenförmigen Bereichen vorgesehen ist. Der erfindungsgemäße Brandschutzformkörper ähnelt in dieser Ausführungsform den bekannten Luftpolsterfolien, bestehend beispielsweise aus zweischichtigem Polyethylen (PE), einer glatten Deckfolie und einer zweiten Lage, in die in regelmäßigen Abständen mittels eines Noppenzylinders und einer Walze runde Polster eingearbeitet sind, die mit dem fließfähigen, anorganischen Granulat befüllt sind. Beispielsweise für das Ausfüllen von großvolumigen Transportverpackungen können statt großnoppiger Polsterfolien auch Kissen eingesetzt werden, die aus einem regelmäßig unterteilten, mit dem fließfähigen, anorganischen Granulat befüllten Folienschlauch bestehen. An den Schweißstellen kann der Folienschlauch zum einfacheren Abtrennen perforiert sein.

Dadurch kann der erfindungsgemäße Brandschutzformkörper sozusagen in Form von Laufmeterware vorgesehen werden, wobei die das Granulat umschließenden polster- oder kissenförmigen Bereiche durch Schweißnähte abgegrenzt sind. Diese abgegrenzten Bereiche können auch evakuiert sein, wobei der erfindungsgemäße Brandschutzformkörper ein Höchstmaß an Flexibilität beibehält. Eine derartige Laufmeterware kann beispielsweise zur Verpackung beim Transport von großen und/oder runden Gefahrengütern vorgesehen werden.

Hinsichtlich des erfindungsgemäß verwendeten fließfähigen, anorganischen Granulats werden Perlite beispielsweise aus porigem und schmelzbarem Vulkangestein gewonnen. Beim raschen Erhitzen verdampft loses, durch Absorption gebundenes Wasser aus den Luftporen und der so geblähte Perlit nimmt ein bis zu 20-faches Volumen gegenüber dem Ausgangsmaterial an. Perlite sind nicht brennbar und erfüllen die Brandschutzanforderungen A1. Wie bereits ausgeführt kann das erfindungsgemäß verwendete fließfähige, anorganische Granulat beispielsweise mittels eines Verfahrens, wie in der WO 2013/053635 A1 geoffenbart, geschlossenzellig hergestellt werden.

Die Verwendung eines Granulats mit sehr geringen Schüttdichten ab 25 kg/m³ ist für das Transportwesen ein wichtiger Kostenfaktor. Ein wesentliches Merkmal ist dabei, dass das erfindungsgemäße Granulat nicht lose in die Verpackung eingeschüttet wird, sondern mittels einer Umhüllung bestehend zumindest teilweise aus Thermoplastmaterial zu einem Granulat-Polster verpackt ist und somit das Gefahrgut allseitig staubfrei umschließen kann. Bei Bedarf, also im Falle eines Brandes, sind keine weiteren Zusatzbauteile wie z.B. Löscheinrichtungen notwendig, da das Granulat durch Schmelzen der Umhüllung von selbst freigesetzt und als Löschmittel aktiv wird. Ein weiterer Vorteil des erfindungsgemäßen Brandschutzformkörpers ist die hohe Flexibilität. Starre Isolierungen, wie beispielsweise Plattensysteme in Batteriekästen von Fahrzeugen, können durch Bewegungen, Schläge, Rütteln oder Vibrationen zerbrechen und erfüllen daher nicht mehr die geforderte Sicherheit. Bei Nichtgebrauch der Löschfunktion kann der erfindungsgemäße Brandschutzformkörper wieder verwendet werden, oder das Granulat wird ökologisch als Bauschutt entsorgt oder als Garten- und Bodenverbesserer verwendet. Die Herstellung des Granulats für den erfindungsgemäßen Brandschutzformkörper ist im Stand der Technik gut bekannt und durch Verwendung neuer Verfahren, wie beispielsweise in der WO 2013/053635 A1 geoffenbart, sehr wirtschaftlich und umweltfreundlich.

Der Brandschutz des erfindungsgemäßen Formkörpers ist aufgrund seiner Eigenschaften für die Anwendung zur Vorbeugung der meisten Brandklassen geeignet. Polster oder Kissen befüllt mit dem fließfähigen, anorganischen Granulat können zur vorbeugenden Feuerschutz-Löschmittel-Kombination für den Transport gefährlicher Güter, wie beispielsweise Lithiumbatterien, als auch zum Einsatz in Batterieboxen von Flug- und Kraftfahrzeugen, Freizeit- oder Elektronikgeräten oder sonstigen Gerätschaften verwendet werden. Die erforderliche Sicherheit beim Transport ergibt sich aus der Verwendung stabiler Außenhüllen, wie z.B. Karton als Verpackungsmaterial, wahlweise mit oder ohne zusätzlicher feuerfester Innenbeschichtung, und den das Gefahrgut umhüllenden erfindungsgemäßen Brandschutzformkörpern, welche mit dem fließfähigen, anorganischen Granulat befüllt sind und das Gefahrgut allseitig umschließen. Im Falle beispielsweise eines Batteriebrandes kann sich kurzfristig eine hohe Wärmeenergie von z.B. 2000 °C entwickeln, wodurch die aus Thermoplastmaterial bestehende Umhüllung des Formkörpers in diesem Einflussbereich sofort abschmilzt, das fließfähige, anorganische Granulat kann nun das Gefahrgut kontaktieren und somit eine ideale Isolierschicht zum Ersticken der Flammen aufbauen. Bei Verwendung beispielsweise von geblähtem Perlit für das erfindungsgemäße fließfähige, anorganische Granulat erweicht dieses ab etwa 700 °C und sintert zu einer stabilen festen Form oder Teilform. Diese dichte Anbackung und der zusätzliche Sintereffekt fördern den Sauerstoffentzug am Brandherd, so dass für die Dauer des Batteriebrandes der Feuerschutz bzw. die Funktion der Feuerlöschung in Form des Granulats als mineralisches Löschmittel gegeben ist. Der Löscheffekt am Brandherd wird durch Ersticken erreicht, also durch Reduzierung des Luftvolumens in Folge von Fließen oder Rieseln des erfindungsgemäßen Granulats zu einer dichteren Granulatanbackung und/oder durch den Sinter- und Schmelzvorgang des (wasserfeien) Granulats.

Wenn im Zusammenhang mit der vorliegenden Erfindung von einem Granulat gesprochen wird, so wird damit Materie mit einem körnigen bis pulverförmigen, leicht schüttbaren Feststoff bezeichnet. Granulare Materie, auch ein granulares Medium oder Granulat genannt, besteht aus vielen kleinen, festen Partikeln wie Körnern oder Kugeln. Beispiele für diesen Zustand sind körnige Materialien wie Sand, pulverförmige Materialien wie Puder oder in großen Mengen auch loses Material wie beispielsweise Geröll. Man verwendet auch die Begriffe "Haufwerk" für mechanische und "Schüttgut" für logistische Aspekte. Wichtige Abgrenzungsmerkmale für Granulate sind, dass die Teilchen makroskopische Größe haben (diese werden materialkundlich "Korn" genannt), also weder durch Quanteneffekte noch durch thermische Bewegung gestört werden, und nur über Kontaktkräfte wechselwirken. Es handelt sich bei einem Granulat nicht um einen Aggregatzustand der Materie an sich, sondern um die kollektiven Eigenschaften einer Ansammlung von Festkörpern. Auffälligste Eigenschaft granularer Materie ist, dass sie sich manchmal wie ein Festkörper verhält, beispielsweise können Steine auf Sand liegen ohne einzusinken, und manchmal wie eine Flüssigkeit, so passt sich beispielsweise Sand der Form eines Gefäßes an und "fließt" bei Kippen aus ihm heraus.

Die Physik der granularen Materie beruht auf einfachen mechanischen und, bei genügend kleinen Partikeln, elektrostatischen Interaktionen. Durch die große Zahl der Reaktionspartner entsteht jedoch ein Vielkörperproblem mit hoher Komplexität, das zu vielfältigen Effekten führt. Ein Beispiel ist der Paranuss-Effekt, bei dem in einem Gemisch verschieden großer Partikel die größeren an die Oberfläche driften. Die Eigenschaften granularer Materie ändern sich stark, wenn ihr geringe Mengen an Flüssigkeit zugefügt werden, da diese die Reibung der Teilchen senken und durch Kohäsion zu gegenseitiger Anziehung führen kann. So erklärt sich etwa die Standfestigkeit von Sandburgen.

Auffälligste Eigenschaft granularer Materie ist, dass sie sich wie ein Festkörper verhält, wenn sie in Form gehalten wird, bei Auflösung der Form oder des Fließwiderstandes rieselt das Granulat fließfähig in eine andere sich gerade bietende Form. Das bedeutet, dass sich das erfindungsgemäße Granulat bei jeder Veränderung der ursprünglichen Aufbewahrungsform (Polster, Platte, Box etc.) oder der geometrischen Form der Verpackung der Umgebung anpasst und somit den Brandschutz und/oder die Löschwirkung optimiert, solange aufgrund übermäßiger Temperaturentwicklung keine Sinter- oder Schmelzphasen des erfindungsgemäßen Granulats eingetreten sind. Durch das optimierte dichte Abdecken durch das erfindungsgemäße Granulat oder in den Sinter- oder Schmelzphasen des Gefahrguts wird der Brandherd eingedämmt, wodurch ein Ausbreiten der Gefahr verhindert bzw. durch den zusätzlichen Sauerstoffentzug der Brandherd gelöscht wird.

Weiters ist das erfindungsgemäß verwendete Granulat aufgrund seiner geringen Wasseraufnahme schwimmfähig, dies kann auch bei anderen Gefahrgütern hinsichtlich Löschwirkung von Vorteil sein.

Das erfindungsgemäß verwendete Granulat weist bei der geringen Schüttdichte eine hohe thermische Isolierfähigkeit auf, je nach mineralischer Analyse oder durch Additive kann der Erweichungs- bzw. der Schmelzpunkt des Granulats gesteuert werden. Das erfindungsgemäß verwendete Granulat hat eine gute Rieselfähigkeit und ist nicht gesundheits- und/oder umweltgefährdend.

Gemäß einer weiteren bevorzugten Ausführungsform wird die Reibungselektrizität des erfindungsgemäß verwendeten Granulats durch Vorsehen an sich bekannter innerer und/oder äußerer Antistatika, als Zusatzstoffe im Granulat selbst bzw. in der Umhüllung, herabgesetzt, wobei die Antistatika in an sich bekannter Weise leitend oder nicht leitend sein können. Die Antistatika verringern die elektrostatische Aufladung dabei entweder durch eine verbesserte Ableitung überschüssiger elektrischer Ladungen oder durch Verminderung der Reibung..

Enthält das Transport-Gefahrgut ein brandgefährdetes flüssiges Potential, so kann das erfindungsgemäß verwendete Granulat zusätzlich mit offenporigen und/oder saugfähigen Materialkomponenten, wie z.B. offenzelligem Perlit, vermischt werden, so dass bei Flüssigkeitsaustritt ein unkontrolliertes Wegfließen verhindert wird und die Brandschutz- und Löschwirkung aufrecht bleibt.

Repräsentative Proben des erfindungsgemäß verwendeten Granulats, hergestellt mittels eines Verfahrens wie in der WO 2013/053635 A1 beschrieben und ausgehend als Rohstoff von Natur-Mineral-Perliten mit SiO₂ 60-80%, CaO 0-2%, Al₂O₃ 7-18%, MgO 0-1,5%, TiO₂ 0-1%, Na₂O 0,6-10%, Fe₂O₃ 0-2,5% und K₂O 1-5,5% (alle Angaben in %-Masse), wurden hinsichtlich ihrer Fließfähigkeit im Vergleich zum Stand der Technik ("Bachl-Perlite-DS", erhältlich von Karl Bachl GmbH & Co KG in 94133 Röhrnbach, DE) getestet. Gemessene Parameter waren dabei das Ausbreitmaß (Durchmesser des Kegels, der beim Ausschütten einer definierten Menge an Granulat entsteht), Höhe des Schüttkegels und Neigungswinkel des Schüttkegels. Der verwendete Messzylinder hatte einen Durchmesser von 36 mm und eine Höhe von 160 mm, die Versuche wurden durchgeführt, indem der auf einer ebenen Fläche stehende (rohrförmige) Messzylinder mit dem zu testenden Granulat einer bestimmten Korngröße gefüllt und dann durch Abziehen nach oben entfernt wurde. Je nach Fließfähigkeit bildete das Granulat dann einen Kegel mit bestimmtem Durchmesser und Höhe, je fließfähiger das Granulat war, desto größer der Durchmesser des Schüttkegels und desto geringer seine Höhe. Aus Durchmesser und Höhe berechnete sich die Neigung des Schüttkegels.

| Material Type | Gewicht g | Meßzyl. Vol. dm³ 0,1609 | Schüttgewicht kg/m³ | Ausbreitmaß - Durchmesser | | | Schüttkegel Höhe | | Winkel ° | Korngrößen |
|---|---|---|---|---|---|---|---|---|---|---|
| | | | | Min. mm | Max. mm | Ø mm | mm | tan | | |
| **Bachl**-**Perlite**-**DS** | | | | | | | | | | |
| 1 | 13,30 | | 82,66 | 130 | 132 | 131,0 | 27,0 | 0,412 | 22,39 | **> 0,85-6,0 mm** |
| 2 | 13,07 | | 81,23 | 130 | 130 | 130,0 | 26,0 | 0,400 | 21,80 | |
| 3 | 13,11 | | 81,48 | 125 | 125 | 125,0 | 28,0 | 0,448 | 24,13 | |
| Durchschnitt | 13,16 | | 81,79 | | | 128,7 | | | 22,77 | |
| 1 | 14,28 | | 88,75 | 145 | 155 | 150,0 | 18,5 | 0,247 | 13,87 | **0 - 6 mm** |
| 2 | 15,47 | | 96,15 | 140 | 135 | 137,5 | 17,5 | 0,255 | 14,31 | |
| 3 | 14,94 | | 92,85 | 145 | 145 | 145,0 | 20,0 | 0,276 | 15,43 | |
| Durchschnitt | 14,90 | | 92,58 | | | 144,2 | | | 14,54 | |

| **erfindungsgemäß verwendete Perlite** | | | | | | | | | | |
|---|---|---|---|---|---|---|---|---|---|---|
| **sigra850** | | | | | | | | | | |
| 1 | 10,70 | | 66,50 | 173 | 174 | 173,5 | 13,3 | 0,153 | 8,69 | **0,85** - **1,5 mm** |
| 2 | 10,90 | | 67,74 | 165 | 167 | 166,0 | 14,5 | 0,175 | 9,93 | |
| 3 | 10,60 | | 65,88 | 178 | 180 | 179,0 | 14,0 | 0,156 | 8,86 | |
| 4 | 10,40 | | 64,64 | 178 | 180 | 179,0 | 13,7 | 0,153 | 8,69 | |
| Durchschnitt | 10,63 | | 66,09 | | | 174,7 | | | 9,16 | |

| **sigra560** | | | | | | | | | | |
|---|---|---|---|---|---|---|---|---|---|---|
| 1 | 12,72 | | 79,06 | 173 | 173 | 173,0 | 18,0 | 0,208 | 11,75 | **0,56-**< **0,85 mm** |
| 2 | 13,60 | | 84,52 | 168 | 170 | 169,0 | 18,2 | 0,215 | 12,13 | |
| 3 | 13,46 | | 83,65 | 172 | 173 | 172,5 | 15,0 | 0,174 | 9,87 | |
| Durchschnitt | 13,26 | | 82,41 | | | 171,5 | | | 11,25 | |

| **sigra335** | | | | | | | | | | |
|---|---|---|---|---|---|---|---|---|---|---|
| 1 | 15,50 | | 96,33 | 170 | 176 | 173,0 | 13,0 | 0,150 | 8,53 | **0,335-**< **0,56 mm** |
| 2 | 15,50 | | 96,33 | 170 | 172 | 171,0 | 12,5 | 0,146 | 8,31 | |
| 3 | 16,00 | | 99,44 | 180 | 190 | 185,0 | 13,0 | 0,141 | 8,03 | |
| Durchschnitt | 15,67 | | 97,37 | | | 176,3 | | | 8,29 | |

| **sigra280** | | | | | | | | | | |
|---|---|---|---|---|---|---|---|---|---|---|
| 1 | 20,45 | | 127,10 | 175 | 178 | 176,5 | 16,0 | 0,181 | 10,26 | **0,280-< 0,335 mm** |
| 2 | 20,36 | | 126,54 | 164 | 164 | 164,0 | 15,2 | 0,185 | 10,48 | |
| 3 | 20,19 | | 125,48 | 171 | 172 | 171,5 | 13,0 | 0,152 | 8,64 | |
| Durchschnitt | 20,33 | | 126,37 | | | 170,7 | | | 9,79 | |

| **sigra212** | | | | | | | | | | |
|---|---|---|---|---|---|---|---|---|---|---|
| 1 | 23,70 | | 147,30 | 172 | 172 | 172,0 | 13,0 | 0,151 | 8,59 | **0,212-< 0,280 mm** |
| 2 | 23,80 | | 147,92 | 174 | 182 | 178,0 | 12,5 | 0,140 | 7,97 | |
| 3 | 24,20 | | 150,40 | 174 | 179 | 176,5 | 13,0 | 0,147 | 8,36 | |
| Durchschnitt | 23,90 | | 148,54 | | | 175,5 | | | 8,31 | |

| **sigra140** | | | | | | | | | | |
|---|---|---|---|---|---|---|---|---|---|---|
| 1 | 34,80 | | 216,28 | 173 | 174 | 173,5 | 13,9 | 0,160 | 9,09 | **0,140-< 0,212 mm** |
| 2 | 35,50 | | 220,63 | 175 | 177 | 176,0 | 13,4 | 0,152 | 8,64 | |
| 3 | 35,60 | | 221,26 | 174 | 175 | 174,5 | 13,7 | 0,156 | 8,87 | |
| Durchschnitt | 35,30 | | 219,39 | | | 174,7 | | | 8,87 | |

| **sigra280/560** | (Kombi 50%/50%) | | | | | | | | | |
|---|---|---|---|---|---|---|---|---|---|---|
| 1 | 16,60 | | 103,17 | 169 | 172 | 170,5 | 10,0 | 0,117 | 6,67 | **0,280-< 0,850 mm** |
| 2 | 16,60 | | 103,17 | 178 | 178 | 178,0 | 11,0 | 0,124 | 7,07 | |
| 3 | 16,80 | | 104,41 | 177 | 178 | 177,5 | 11,0 | 0,124 | 7,07 | |
| Durchschnitt | 16,67 | | 103,58 | | | 175,3 | | | 6,94 | |

Es versteht sich, dass ein Brandschutzformkörper gefüllt mit dem erfindungsgemäß verwendeten Granulat eine bessere Löschwirkung zeigt, wenn das Granulat einen Schüttkegel mit großem Durchmesser und geringer Höhe bildet, da dies bedeutet, dass das Granulat besser fließfähig ist. Ein besser fließfähiges Granulat wird nach dem Aufschmelzen der äußeren Umhüllung des mit dem Granulat gefüllten Brandschutzformkörpers schnell und gleichmäßig austreten und den Brandherd, wie bereits ausgeführt, durch Ersticken löschen.

## Patentansprüche

1. Brandschutzformkörper mit einer zumindest teilweisen äußeren Umhüllung aus einem thermoplastischen Material und einer Füllung, welche ein fließfähiges, anorganisches Granulat umfasst, wobei das fließfähige, anorganische Granulat eine Dichte von 25 bis 150 kg/m³, vorzugsweise 35 bis 80 kg/m³, noch bevorzugter etwa 50 bis 70 kg/m³, und eine Wasseraufnahme bei Raumtemperatur von unter 100 %, vorzugsweise unter 95 %, aufweist, **dadurch gekennzeichnet, dass** der Brandschutzformkörper evakuiert ist.

2. Brandschutzformkörper nach Anspruch 1, **dadurch gekennzeichnet, dass** das fließfähige, anorganische Granulat eine Erweichungs- bzw. Sintertemperatur von > 700 °C und einen Schmelzpunkt von > 1200 °C hat.

3. Brandschutzformkörper nach Anspruch 1 oder 2, **dadurch gekennzeichnet, dass** das thermoplastische Material der äußeren Umhüllung eine Schmelztemperatur im Bereich von ≤ 350 °C, vorzugsweise ≤ 200 °C, aufweist.

4. Brandschutzformkörper nach einem der Ansprüche 1 bis 3, **dadurch gekennzeichnet, dass** das thermoplastische Material der äußeren Umhüllung zumindest teilweise in Form einer Folie oder Platte vorliegt.

5. Brandschutzformkörper nach einem der Ansprüche 1 bis 4, **dadurch gekennzeichnet, dass** das fließfähige, anorganische Granulat eine Struktur mit überwiegend geschlossenen, vorzugsweise zu über 90 % geschlossenen, Zellen umfasst.

6. Brandschutzformkörper nach einem der Ansprüche 1 bis 5, **dadurch gekennzeichnet, dass** das fließfähige, anorganische Granulat ausgewählt ist aus der Gruppe bestehend aus geblähtem Perlit, geblähtem Vermiculit, Natur- oder Hüttenbims, Blähton, Blähglas, Schaumschlacke, Steinwollegranulat oder Hüttenwolle sowie Kombinationen davon.

7. Brandschutzformkörper nach Anspruch 6, **dadurch gekennzeichnet, dass** für das fließfähige, anorganische Granulat als Rohstoff Natur-Mineral-Perlite mit SiO₂ 60-80 %-Masse, CaO 0-2 %-Masse, Al₂O₃ 7-18 %-Masse, MgO 0-1,5 %-Masse, TiO₂ 0-1 %-Masse, Na₂O ,6-10 %-Masse, Fe₂O₃ 0-2,5 %-Masse und K₂O 1-5,5 %-Masse verwendet wird.

8. Brandschutzformkörper nach einem der Ansprüche 1 bis 7, **dadurch gekennzeichnet, dass** die äußere Umhüllung aus zwei zumindest bereichsweise miteinander verschweißten Folien besteht, welche Folien gegebenenfalls unterschiedliche Stärken und Zusammensetzungen aufweisen, wobei die verschweißten Bereiche polster- oder kissenförmig ausgebildet sind und die ein fließfähiges, anorganisches Granulat umfassende Füllung jeweils in den polster- oder kissenförmigen Bereichen vorgesehen ist.

9. Brandschutzformkörper nach einem der Ansprüche 1 bis 8, **dadurch gekennzeichnet, dass** die Umhüllung durch Vorsehen von inneren oder äußeren Antistatika antistatisch ausgestattet ist, wobei die Antistatika leitend oder nicht leitend sind.

10. Brandschutzformkörper nach einem der Ansprüche 1 bis 9, **dadurch gekennzeichnet, dass** das fließfähige, anorganische Granulat einen Schüttwinkel von kleiner als 11,5°, vorzugsweise kleiner als 10°, aufweist.

## Claims

1. A fire protective moulded body with an at least partial outer sheath of a thermoplastic material and a filling, which includes a flowable, inorganic granular material, wherein the flowable, inorganic granular material has a density of 25 to 150 kg/m³, preferably 35 to 80 kg/m³, more preferably about 50 to 70 kg/m³, and a water absorption at room temperature of less than 100%, preferably under 95%, **characterised in that** the fire protective moulded body is evacuated.

2. A fire protective moulded body as claimed in Claim 1, **characterised in that** the flowable, inorganic granular material has a softening or sintering temperature of > 700°C and a melting point > 1200 °C.

3. A fire protective moulded body as claimed in Claim 1 or 2, **characterised in that** the thermoplastic material of the outer sheath has a melting temperature in the range ≤ 350 °C, preferably ≤ 200 °C.

4. Afire protective moulded body as claimed in one of Claims 1 to 3, **characterised in that** the thermoplastic material of the outer sheath is present at least partially in the form of a film or plate.

5. Afire protective moulded body as claimed in one of Claims 1 to 4, **characterised in that** the flowable, inorganic granular material includes a structure with cells which are predominately closed, preferably closed to above 90%.

6. Afire protective moulded body as claimed in one of Claims 1 to 5, **characterised in that** the flowable, inorganic granular material is selected from the group consisting of expanded perlite, expanded vermiculite, natural pumice or pumice slag, expanded clay, expanded glass, foamed slag, wool granulate or slag wool and combinations thereof.

7. Afire protective moulded body as claimed in Claim 6, **characterised in that** natural mineral perlite with SiO₂ 60 - 80 % by mass, CaO 0-2 % by mass, Al₂O₃ 7 - 18 % by mass, MgO 0-1.5 % by mass, TiO₂ 0-1 % by mass, Na₂O 6 - 10 % by mass, Fe₂O₃ 0-2.5 % by mass and K₂O 1-5.5 % by mass is used as the raw material for the flowable, inorganic granular material.

8. Afire protective moulded body as claimed in one of Claims 1 to 7, **characterised in that** the outer sheath consists of two films welded together at least in regions, which films optionally have different thicknesses and compositions, wherein the welded regions are of pad or cushion shaped construction and the filling including a flowable, inorganic granular material is provided in the pad or cushion shaped regions.

9. Afire protective moulded body as claimed in one of Claims 1 to 8, **characterised in that** the sheath has antistatic properties by virtue of the provision of internal or external antistatic agents, wherein the antistatic agents are conductive or non-conductive.

10. Afire protective moulded body as claimed in one of Claims 1 to 9, **characterised in that** the flowable, inorganic granular material has an angle of repose of less than 11.5°, preferably less than 10°.

## Revendications

1. Objet moulé ignifuge comprenant une enveloppe au moins partiellement extérieure en un matériau thermoplastique et une charge, qui comprend un granulat inorganique fluide, le granulat inorganique fluide présentant une masse volumique de 25 à 150 kg/m³, de préférence de 35 à 80 kg/m³, d'une manière encore plus préférée d'environ 50 à 70 kg/m³, et une absorption d'eau à la température ambiante, inférieure à 100 %, de préférence inférieure à 95 %, **caractérisé en ce qu'**on a fait le vide dans l'objet moulé ignifuge.

2. Objet moulé ignifuge selon la revendication 1, **caractérisé en ce que** le granulat inorganique fluide a une température de ramollissement ou de frittage > 700°C et un point de fusion > 1200°C.

3. Objet moulé ignifuge selon la revendication 1 ou 2, **caractérisé en ce que** le matériau thermoplastique de l'enveloppe extérieure présente une température de fusion comprise dans la plage ≤ 350°C, de préférence ≤ 200°C.

4. Objet moulé ignifuge selon l'une des revendications 1 à 3, **caractérisé en ce que** le matériau thermoplastique de l'enveloppe extérieure se présente au moins partiellement sous forme d'une feuille ou d'une plaque.

5. Objet moulé ignifuge selon l'une des revendications 1 à 4, **caractérisé en ce que** le granulat inorganique fluide comprend une structure comprenant des alvéoles essentiellement fermés, de préférence fermés à raison de plus de 90 %.

6. Objet moulé ignifuge selon l'une des revendications 1 à 5, **caractérisé en ce que** le granulat inorganique fluide est choisi dans le groupe consistant en la perlite soufflée, la vermiculite soufflée, la pierre ponce expansée ou de laitier, l'argile expansée, le verre expansé, le laitier mousseux, le granulat de laine de roche ou la laine de laitier, ainsi que les combinaisons de ceux-ci.

7. Objet moulé ignifuge selon la revendication 6, **caractérisé en ce qu'**on utilise pour le granulat inorganique fluide, en tant que matière première, des perlites minérales naturelles ayant une teneur en SiO₂ de 60 à 80 % en masse, en CaO de 0 à 2 % en masse, en Al₂O₃ de 7 à 18 % en masse, en MgO de 0 à 1,5 % en masse, en TiO₂ de 0 à 1 % en masse, en Na₂O de 6 à 10 % en masse, en Fe₂O₃ de 0 à 2,5 % en masse et en K₂O de 1 à 5,5 % en masse.

8. Objet moulé ignifuge selon l'une des revendications 1 à 7, **caractérisé en ce que** l'enveloppe extérieure est constituée de deux feuilles soudées l'une à l'autre au moins par zones, lesquelles feuilles présentant éventuellement des épaisseurs et des compositions différentes, le zones soudées étant conçues en forme d'un rembourrage ou d'un coussin, et la charge comprenant un granulat inorganique fluide étant prévue dans chacune des zones en forme de rembourrage ou de coussin.

9. Objet moulé ignifuge selon l'une des revendications 1 à 8, **caractérisé en ce que** l'enveloppe est rendue antistatique grâce à la fourniture d'antistatiques internes ou externes, les antistatiques étant conducteurs ou non conducteurs.

10. Objet moulé ignifuge selon l'une des revendications 1 à 9, **caractérisé en ce que** le granulat inorganique fluide présente un angle de talus inférieur à 11,5°, de préférence inférieur à 10°.
